(19) **Europäisches Patentamt / European Patent Office / Office européen des brevets**

(11) **EP 2 130 865 B1**

(12) **EUROPEAN PATENT SPECIFICATION**

(45) Date of publication and mention
of the grant of the patent:
**17.11.2010 Bulletin 2010/46**

(51) Int Cl.:
***C08L 23/08*** (2006.01)   ***C09D 123/08*** (2006.01)

(21) Application number: **08157702.5**

(22) Date of filing: **06.06.2008**

(54) **Extrusion coating polyethylene composition**

Extrusionsbeschichtung einer Polyethylenzusammensetzung

Composition de polyéthylène de revêtement par extrusion

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**09.12.2009 Bulletin 2009/50**

(73) Proprietor: **Borealis AG**
**1220 Vienna (AT)**

(72) Inventors:
• **Nummila-Pakarinen, Auli**
**06100 Porvoo (FI)**

• **Laiho, Erkki**
**00280, Helsinki (FI)**
• **Yli-Peltola, Juha**
**00810 Helsinki (FI)**
• **Sainio, Markku**
**06100 Porvoo (FI)**
• **Voigt, Björn**
**422 43 Hisings Backa (SE)**

(74) Representative: **Kador & Partner**
**Corneliusstraße 15**
**80469 München (DE)**

(56) References cited:
**WO-A-97/19965      WO-A-2005/002744**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Background of the invention

The present invention deals with polyethylene compositions to be used in extrusion coating. In extrusion coating a thin film of polymer melt is extruded through a flat die and pressed onto a moving substrate. The substrate may be, among others, paper, paperboard, a plastic film or a metal film. The line speed in modern equipment can be very high, up to 1000 m/min or even more.

The increasing processing and product requirements and quality demands may result in several different problems that can occur in the extrusion coating process. Examples of these problems are edge waving, edge tear or web break. The rheology-related phenomena that may cause problems in extrusion coating are for example web stability, neck-in and draw down.

The web stability is a problem with film processes because between the die exit and the cooling roll, several competing forces combine to complicate the web cooling process.

A further crucial point is the neck-in, which is, in short, the difference between the width of the die and the width of the coating on the substrates.

A neck-in as low as possible is preferred, since a low neck-in leads to a low amount of wasted polymer as the thicker edges need to be cut away. Even coating weight and stable edges are important features for good product and reel quality. Especially unstable edges can lead to uncoated edge areas of the substrate.

In addition the draw down, the ability of a melt to be drawn to thin films without breaking and the maximum line speed at which the polymer web breaks, is an important factor in extrusion coating. The draw down of the material needs to be high in order to obtain good quality of the coating at high line speeds. Limitations in draw down may also lead to draw resonance with uneven coating weight and unstable edges as result.

Field of the invention

The present invention deals with polymer compositions to be used in extrusion coating processes.

The compositions show high processability and can be extrusion coated to different substrates at a high line speed, with low neck-in and high draw down.

Particularly the invention relates to compositions comprising a bimodal metallocene-based linear low density polyethylene terpolymer and a high pressure low density polyethylene copolymer, produced in a tubular reactor.

State of the Art

Low density polyethylene (LDPE), conventionally made in a high pressure radical process, preferably in an autoclave reactor, has been used in extrusion coating for many years.

Polymers used in extrusion coating need to possess certain properties to make them useful as coating materials. In this regard LDPEs do not possess the ideal mechanical properties required for extrusion coating since they lack the necessary toughness and abrasion resistance. It is therefore known to blend LDPEs with other olefin polymer grades to improve mechanical properties. Hence LDPE has been combined with higher density polyethylene (PE), e.g. medium or high density PE or linear low density PEs to improve mechanical properties. For example a small amount of LDPE (5 to 30 wt%) can be added to linear low density polyethylene (LLDPE) to improve processability in an extrusion coating composition. However when the content of LDPE increases in the composition, then the beneficial properties of the linear polymer, e.g. environmental stress cracking resistance, barrier properties, sealing properties, are soon diluted or lost. On the other hand if the LDPE content is too low then the blend may not have sufficient processability. The problem with such low LDPE content blends is that whilst they have better processability than an LLDPE alone, they may not be extrudable or drawn down at high take-off rates, showing instabilities and/or excessive neck-in. There is therefore a trade off between good mechanical properties and good processability.

For these reasons there remains a need to devise further PE polymer compositions suitable for extrusion coating which provide both good mechanical and processing properties.

The following documents, amongst others, propose special blends for extrusion coating:

WO 01/62847 discloses a bimodal polyethylene composition made by using a single site catalyst in a multistage process. The composition can be used as an extrusion coating material in combination with minor amounts of LDPE prior to extrusion. The polymer produced is preferably a bimodal ethylene/butene copolymer with butene used in both loop and gas phase stages of the two stage process.

WO 2005/002744 discloses bimodal metallocene-based linear low density polyethylene terpolymers (bimodal mLLDPE terpolymers) for extrusion coating. According to the Examples and the description of WO 2005/002744 these bimodal mLLDPE terpolymers can be blended especially with LDPE, said LDPE preferably having a melt index of at least 6.5 g/10 min. The LDPE used was a polymer manufactured and sold by Borealis under trade name CA8200 and had an $MFR_2$ of 7.5 g/10 min and density of 920 $kg/m^3$. CA8200 is a high pressure low density polyethylene homopolymer produced in an autoclave reactor.
The blends show a combination between good sealing properties and processability

EP 1 777 238 discloses a special LDPE having a melt index $MFR_2$ of 2.5 to 10.0 g/10 min, especially from 2.5 to 6.5 g/10 min and a density of 910 to 935 $kg/m^3$, preferably prepared in an autoclave reactor. In addition this special LDPE has a dynamic viscosity $\eta_{0.05}$ at a shear rate of 0.05 rad/s and a dynamic viscosity $\eta_{300}$ at a shear rate of 300 rad/s which satisfy the following relationship:

$$\eta_{300} \leq 108 \text{ Pa*s} + 0.0253* \eta_{0.05}$$

and/or
a phase shift $\delta_{0.5}$ at a frequency of 0.5 rad/s and a phase shift $\delta_{300}$ at a frequency of 300 rad/s, which satisfy the following relationship:

$$\tan \delta_{300} \geq 0.45 + 0.164* \tan \delta_{0.05}$$

According to the description and the Examples of EP 1 777 238 this special LDPE can be blended with other polymers, especially with olefin polymers produced by copolymerising ethylene with one or more alpha-olefin copolymers having from 3 to 20 carbon atoms in the presence of a single site catalyst, such as a metallocene catalyst. Preferred are bimodal copolymers of ethylene and at least two alpha-olefin comonomers, like those disclosed in WO 2005/002744. The blends are advantageously used in extrusion coating and have a good processability.

Even though the prior art offers already a variety of products useful for extrusion coating having relatively good processability at high line speed and/or one or more other advantageous properties, there is still demand for further improvement of these properties.

Summary of the Invention

The objective of the present invention is therefore to provide a polyethylene composition suitable for extrusion coating, which shows high processability at high line speed and an unexpectedly good combination of web stability, neck in and draw down.
It has now surprisingly been found that by combining a bimodal metallocene-based linear low density polyethylene terpolymer as described in WO 2005/002744 and a high pressure low density polyethylene copolymer, produced in a tubular reactor, polyethylene compositions ideal for extrusion coating may be produced which show all the desired above mentioned properties.

Therefore the object of the invention is solved by an extrusion coating polyethylene composition A), comprising

a) 95 wt% - 40 wt% of a bimodal metallocene-based linear low density polyethylene terpolymer having a melt index MFR according to ISO 1133 (190°C, 2.16 kg) of from 3 to 40 g/10 min and a density according to ISO 1183 of from 900 to 935 $kg/m^3$, which has been produced by polymerising ethylene and two alpha-olefin comonomers having from 4 to 10 carbon atoms in at least two polymerisation stages in the presence of a metallocene catalyst. and

b) 5 wt% - 60wt% of a high pressure low density polyethylene copolymer, produced in a tubular reactor, having a melt index of 0.2 to 8 g/10 min according to ISO 1133 (190°C, 2.16 kg) and a density of 915 to 935 $kg/m^3$ according to ISO 1183, wherein the comonomer is an $\alpha,\omega$-alkadiene.

a) bimodal mLLDPE terpolymer

As component a) a bimodal mLLDPE terpolymer as described in WO 2005/002744 is used.

The bimodal linear low density polyethylene component has a melt index MFR according to ISO 1133 (190°C, 2.16 kg) of from 3 to 40 g/10 min, preferably from 5 to 30 g/10 min and more preferably from 10 to 30 g/10 min. Also, the bimodal linear low density polyethylene has a density according to ISO 1183 of from 900 to 935 kg/m$^3$, preferably from 910 to 925 kg/m$^3$ and more preferably from 912 to 922 kg/m$^3$. Preferably, the multimodal linear low density ethylene polymer has been produced by polymerising ethylene and two alpha-olefin comonomers having from 4 to 10 carbon atoms in at least two polymerisation stages in the presence of a metallocene catalyst.

Suitable comonomers are for example but-1-ene, hex-1-ene, 4-methyl-pent-1-ene, hept-1-ene, oct-1-ene and dec-1-ene.

Preferably used comonomers are but-1-ene and hex-1-ene.

The low molecular weight component of the bimodal linear low density polyethylene comprises from 30 to 70 % by weight, preferably 40 to 60 %, of the bimodal linear low density polyethylene component. It has a weight average molecular weight which is lower than that of the bimodal linear low density polyethylene so that the low molecular weight component has a melt index MFR which is higher than that of the bimodal linear low density polyethylene. Preferably the weight average molecular weight of the low molecular weight component is such that it corresponds to the melt index MFR of about 20 to 800 g/10 min, more preferably from 50 to 300 g/min. Further, the low molecular weight component has a lower content of alpha-olefin comonomer(s) than the bimodal linear low density polyethylene and the content of alpha-olefin comonomers is preferably such that it corresponds to the density of from 930 to 950 kg/m$^3$, more preferably from 930 to 940 kg/m$^3$.

The high molecular weight component of the bimodal linear low density polyethylene comprises from 70 to 30 % by weight, preferably from 60 to 40% of the bimodal linear low density polyethylene component. It has a weight average molecular weight which is higher than that of the bimodal linear low density polyethylene so that the high molecular weight component has a melt index MFR which is lower than that of the bimodal linear low density polyethylene. Preferably the weight average molecular weight of the high molecular weight component is such that it corresponds to the melt index MFR of about 0.01 to 5 g/10 min, more preferably from 0.05 to 3 g/min. Further, the high molecular weight component has a higher content of alpha-olefin comonomer(s) than the bimodal linear low density polyethylene and the content of alpha-olefin comonomers is preferably such that it corresponds to the density of from 880 to 915 kg/m$^3$, more preferably from 890 to 910 kg/m$^3$. Especially the high molecular weight component should have such weight average molecular weight and comonomer content that the bimodal linear low density polyethylene has the desired melt index and density.

Especially preferably, the bimodal linear low density polyethylene has been produced by polymerising ethylene and two alpha-olefin comonomers having from 4 to 10 carbon atoms in at least two polymerisation stages in the presence of a metallocene catalyst. Then it is possible either to feed a different alpha-olefin comonomer to each polymerisation stage or to feed two different alpha-olefin comonomers into one polymerisation stage, which preferably is the stage where the high molecular weight component is produced.

It is preferred that the polymer is prepared in a two or more stage polymerization in which in an earlier stage the lower alpha-olefin comonomer (e.g. but-1-ene) is incorporated and in which in a later stage the higher alpha-olefine comonomer (e.g. hex-1-ene) is incorporated. Nonetheless, it is within the scope of the invention to produce the polymer in a two stage polymerization reaction in which an ethylene homopolymer is produced in the first stage and an ethylene terpolymer is produced in the second stage or vice versa or in which an ethylene copolymer with the higher alpha-olefine comonomer is produced in the first stage and an ethylene copolymer with the lower alpha-olefine comonomer is produced in the second stage. Likewise, an ethylene copolymer may be produced in the first stage and an ethylene terpolymer in the second stage and vice versa. It is also possible to employ a prepolymerisation stage as is well known in the art.

In a more preferred embodiment the polyethylene is formed from a mixture of an ethylene/but-1-ene copolymer (lower molecular weight component) preferably made in the slurry phase and an ethylene/hex-1-ene copolymer (higher molecular weight component) preferably made in the gas phase.

The expression "homopolymer" of ethylene used herein refers to a polyethylene that consists substantially, i.e. at least 98wt%, preferably at least 99wt%, more preferably at least 99,5wt% and most preferably at least 99,8wt% of ethylene units.

The ethylene terpolymers used as component a) for the polymer blend A are produced using a metallocene catalyst, e.g. a catalyst comprising a metal coordinated by one or more η-bonding ligands. The metals are typically Zr, Hf or Ti, especially Zr or Hf. The η-bonding ligand is typically a η$^5$-cyclic ligand, i.e. a homo or heterocyclic cyclopentadienyl group optionally with fused or pendant substituent. Such metallocene catalysts have been widely described in the scientific and patent literature for about twenty years. Such metallocene catalysts are frequently used with catalyst activators or cocatalysts, e.g. alumoxanes such as methylaluminoxane, again as widely described in the literature.

The mLLDPE terpolymer used for the blend A is bimodal, i.e. its molecular weight profile does not comprise a single peak but instead comprises the combination of two peaks (which may or may not be distinguishable) centred about different average molecular weights as a result of the fact that the polymer comprises two separately produced components. In this embodiment, a higher molecular weight component preferably corresponds to a copolymer of the higher alpha-olefin comonomer and a lower molecular weight component preferably corresponds to a copolymer of the lower alpha-olefin comonomer.

Such bimodal ethylene polymers may be prepared for example by two or more stage polymerization or by the use of two or ore different polymerization catalysts in a one stage polymerization.

Preferably however they are produced in a two-stage polymerization using the same metallocene catalysts, in particular a slurry polymerization in a loop reactor followed by a gas phase polymerization in a gas phase reactor.

A loop reactor - gas phase reactor system has been developed by Borealis and is known as BORSTAR® technology. In this respect, reference is made to EP 0 887 379 A1, WO 2004/000899, WO 2004/111095, WO 99/24478, WO 99/24479 and WO 00/68315 .

Preferably the lower molecular weight polymer fraction is produced in a continuously operating loop reactor where ethylene is polymerized in the presence of a polymerization catalyst as stated above and a chain transfer agent such as hydrogen. The diluent is typically an inert aliphatic hydrocarbon, preferably i-butane or propane. A $C_4$-$C_{10}$ alpha-olefine comonomer is added to control the density of the lower molecular weight copolymer fraction.

Preferably the hydrogen concentration is selected so that the lower molecular weight copolymer fraction has the desired melt flow rate.

The slurry is intermittently or continuously removed from the loop and transferred to a separation unit where at least the chain transfer agents (e.g. hydrogen) are separated from the polymer. The polymer containing the active catalyst is then introduced into a gas phase reactor where the polymerization proceeds in the presence of additional ethylene, comonomer and optionally chain transfer agent to produce the higher molecular weight copolymer fraction. The polymer is intermittently or continuously withdrawn from the gas phase reactor and the remaining hydrocarbons are separated from the polymer. The polymer collected from the gas phase reactor is the mLLDPE terpolymer used as component a) for blend A.

The conditions in the gas phase reactor are selected so that the mLLDPE terpolymer has the desired properties.

b) tubular low density polyethylene copolymer

As component b) a low density polyethylene copolymer, produced in a tubular reactor is used.

The polyethylene copolymer is prepared by radical initiated polymerization of ethylene and an α,ω-alkadiene. α,ω-alkadienes preferably have at least 8 carbon atoms and at least 4 carbon atoms between two non-conjugated double bonds, of which at least one is terminal. Examples of suitable alkadienes for use in the manufacturing of the polyethylene copolymer are 1,7-octadiene, 1,9-decadiene, 1,11-dodecadiene and 1,13-tetradecadiene or mixtures thereof.

The ethylene copolymer suitable as component b) comprises 0.03 to 5wt%, preferably 0.05 to 4wt%, more preferably 0.1 to 1.5wt%, based on the total low density polyethylene copolymer, of said alkadiene.

Polymerization of ethylene copolymers by free radical initiated polymerization at high pressure (referred to as high pressure radical polymerization) is well known in the art. Generally, the polymerization is performed by reacting the monomers under the action of one or more radical initiators, such as peroxides, oxygen, azo compounds or combinations thereof, in a reactor at a temperature of about 100 to 350°C and at a pressure of about 100 to 400 MPa. The monomers are normally compressed in several stages up to the desired pressure before introduction into the reactor.

Component b) as used according to the invention is produced in a tubular reactor.

A tubular reactor typically consists of several hundred meters of jacketed high pressure tubing arranged as a series of straight sections connected by 180° bends.

Tubular reactors are either single-feed or multi-feed reactors, including split-feed reactors. In a single-feed tubular reactor (also referred to as front-feed reactor), the total monomer flow is fed to the inlet of the first reaction zone. In a multi-feed tubular reactor, the monomers are fed into the reactor at several locations along the reactor. In a split-feed reactor, the compressed monomer mixture are split into several streams and fed into the reactor at different locations thereof.

Reaction is started by injection of the radical initiator and by an increase in temperature. The reaction mixture cools after the first reaction peak and additional initiator is added to start a second reaction zone. The number of initiator injection points determines the number of reaction zones. A tubular reactor for production of ethylene copolymers by high pressure radical polymerization usually comprises a total of two to five reaction zones. When the reaction is completed, the temperature and the pressure are lowered, typically in two steps using a high-pressure separator and a low-pressure separator. The resulting polymer is recovered and non-reacted monomers are either removed or recycled back to the reactor.

As radical initiators, initiators commonly known in the art may be employed.

During the polymerization it is possible to add for example inhibitors, scavengers and/or chain regulators (such as for example an alcohol, an aldehyde, a ketone or an aliphatic hydrocarbon). Very suitable chain regulators are isopropyl alcohol, propane, propylene and propionaldehyde.

Further details of the production of ethylene polymers by high pressure radical polymerization can be found for example in the Encyclopedia of Polymer Science and Engineering, Vol. 6 (1986), pp 383-410.

In order to have an economically efficient process it may be preferred to recover non-reacted ethylene and diene and recycle it back to the polymerization reactor.

Suitable tubular technologies/processes are well known in the art. Examples are LyondellBasell Lupotech® T, SABTEC CTR® tubular LDPE technology, ExxonMobil Chemical's high pressure tubular process or DSM's 'Clean Tubular Reactor Technology'.

LDPE copolymer produced in a tubular reactor and being suitable to be used in the composition according to the invention has a melt index of 0.2 to 8 g/10 min according to ISO 1133 (190°C, 2.16 kg), preferably of 0.5 to 6 g/10 min, more preferably 1 to 4 g/10 min.

The density of the LDPE copolymer used as component a) is 915 to 935 kg/m$^3$ according to ISO 1183, preferably 918 to 930 kg/m$^3$, more preferably 920 to 925 kg/m$^3$.

Composition A

According to the invention composition A comprises 40 to 95 wt% of component a) (bimodal mLLDPE) and 5 to 60 wt% of component b) (tubular LDPE).

Preferably composition A comprises 50 to 90wt% of component a) and 10 to 50 wt% of component b), more preferably composition A comprises 60 to 80wt% of component a) and 20 to 40 wt% of component b),

The extrusion coating composition in accordance with the present invention may furthermore comprise small amounts of additional, conventional components (additives), commonly used and well known in the extrusion coating art. The type and amount of such additives can be selected by the skilled person on the basis of the general knowledge in the art. Typically these additive do not amount to more than 5 wt.-% (in total), based on the extrusion coating composition.

The extrusion coating composition may be prepared in a usual manner, including blending the individual components using appropriate devices, such as drum mixers kneaders and extruders.

Thus the extrusion coating composition of the present invention may be prepared by mixing the two components and optionally one ore more additives, as described above, to form a dry blend or to form a blend which is then melt kneaded. The melt-kneading may be carried out using a kneading machine, such as a mixing roll, a Branbury mixer, a kneader, or a single-screw or twin-screw extruder.

The composition A is advantageously used in extrusion coating, where it exhibits a number of advantageous features. First, the composition has a good processability and it can be used in coating lines having a line speed of at least 200 m/min, preferably at least 400 m/min and in particular at least 500 m/min, and with low coating weights. Further it shows edge and web stability, low neck-in and high draw down.

When used in the coating process composition A exhibits a reduced risk of draw resonance and an even distribution of the coating is obtained. These two features allow a high throughput in the coating line with a good product quality.

The substrate to be coated can be any substrate known in the art, such as paper, paperboard, Kraft paper, metal foil, plastic films, such as BOPP (bi-oriented polypropylene) film, and cellophane film. To improve the adhesion between the substrate and the plastic layer the methods commonly known in the art may be used, such as ozone treatment of the molten polymer film, flame treatment and corona treatment of the substrate, an adhesive layer may be used, and an adhesion promoter may be used.

Extrusion coating process

The extrusion coating process may be carried out using conventional extrusion coating techniques. Hence, the polymer composition A is fed, optionally together with additives, to an extruding device. From the extruder the polymer melt is passed through a flat die to the substrate to be coated. Due to the distance between the die lip and the nip, the molten plastic is oxidised in the air for a short period, usually leading to an improved adhesion between the coating and the substrate. The coated substrate is cooled on a chill roll, after which it is passed to edge trimmers and wound up. The width of the line may vary between, for example 500 to 1500 mm, e.g. 800 to 1100 mm, with a line speed of up to 5000 m/min, preferably up to 1500 m/min and more preferably up to 1000 m/min, for instance 500 to 800 m/min. The temperature of the polymer melt is typically between 270 and 300°C.

It is also possible to employ a coating line with at least two extruders to make it possible to produce multilayered coatings with different polymers. It is also possible to have arrangements to treat the polymer melt exiting the die to improve adhesion, e.g. by ozone treatment, corona treatment or flame treatment.

The coating will typically be 10 to 1000 $\mu$m in thickness, especially 20 to 100 $\mu$m. The specific thickness will be selected according to the nature of the substrate and its expected subsequent handling conditions. The substrate may be as thick as 10 to 1000 $\mu$m, e.g. 6 to 300 $\mu$m.

In the following, the present invention is described by way of examples.

**Definitions/Measuring Methods**

The following definitions of terms and determination methods apply for the above general description of the invention as well as to the below examples unless otherwise defined.

**Molecular weights, molecular weight distribution (Mn, Mw, MWD) - GPC**

The weight average molecular weight Mw and the molecular weight distribution (MWD = Mw/Mn wherein Mn is the number average molecular weight and Mw is the weight average molecular weight) was measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/L 2,6-Di tert butyl-4-methyl-phenol) as solvent at 145 °C and at a constant flow rate of 1 mL/min. 216.5 μL of sample solution were injected per analysis. The column set was calibrated using relative calibration with 19 narrow MWD polystyrene (PS) standards in the range of 0.5 kg/mol to 11 500 kg/mol and a set of well characterised broad polypropylene standards. All samples were prepared by dissolving 5 - 10 mg of polymer in 10 mL (at 160 °C) of stabilized TCB (same as mobile phase) and keeping for 3 hours with continuous shaking prior sampling in into the GPC instrument.

The **melt flow rates** were measured with a load of 2.16 kg and at 190°C. The melt flow rate (MFR) is that quantity of polymer in grams which the test apparatus standardized to ISO 1133 extrudes within 10 minutes at a temperature of 190°C under a weight of 2.16 kg.

**Density** was determined according to ISO 1183 on compression-moulded specimens.

**Comonomer contents** were measured in a known manner based on Fourier transform infrared spectroscopy (FTIR) calibrated with $^{13}$C-NMR, using Nicolet Magna 550 IR spectrometer together with Nicolet Omnic FTIR software.

**Draw down** DD (10g/m$^2$) was determined by keeping the coating weight constant (10 g/m$^2$) during the testing period. The starting line speed was 100 m/min and it was increased stepwise with steps of 100 m/min in five seconds time until web break or 500 m/min was reached.

**Basis weight** was determined as follows: Five samples were cut off from the extrusion coated paper parallel in the transverse direction of the line. The size of the samples was 10 cm x 10 cm. The samples were put into a solvent for 10 - 30 minutes, after which the paper was removed from the plastic and the solvent was allowed to evaporate. The samples were then weighed and the average was calculated. The result was given as a weight of the plastic per square meter.

**Example 1: preparation of component a) bimodal mLLDPE**

The catalyst was prepared according to the instructions of Catalyst Preparation Example 2 of WO 2005/002744.

A continuously operating loop reactor having a volume of 500 dm$^3$ was operated at 85 °C temperature and 60 bar pressure. Into the reactor were introduced propane diluent, ethylene, 1-butene comonomer, hydrogen and the polymerisation catalyst prepared according to Catalyst Preparation Example 2 of WO 2005/002744 referred to above in such amounts that the ethylene concentration in the liquid phase of the loop reactor was 7 % by mole, the ratio of hydrogen to ethylene was 0.65 mol/kmol, the ratio of 1-butene to ethylene was 155 mol/kmol and the polymer production rate in the reactor was 25 kg/h. The thus formed polymer had a melt index MFR of 140 g/10 min and a density of 935 kg/m$^3$.

The slurry was intermittently withdrawn from the reactor by using a settling leg and directed to a flash tank operated at a temperature of about 50 °C and a pressure of about 0,3 MPa.

From the flash tank the powder, containing a small amount of residual hydrocarbons, was transferred into a gas phase reactor operated at 75 °C temperature and 20 bar pressure. Into the gas phase reactor were also introduced additional ethylene, 1-hexene comonomer and nitrogen as inert gas in such amounts that the ethylene concentration in the circulating gas was 22 % by mole, the ratio of hydrogen to ethylene was about 0.7 mol/kmol, the ratio of 1-hexene to ethylene was 18 mol/kmol and the polymer production rate was 25 kg/h.

The production split between the loop and gas phase reactors was thus 50/50.

The resulting terpolymer had a melt index MFR of 17 g/10 min and a density of 917 kg/m$^3$.

**Example 2: Preparation of compound b) LDPE copolymer**

An ethylene-1,7-octadiene copolymer was produced by radical polymerization in a 3 zone, front-feed tubular reactor. The pressure in the reactor was between 250 - 270 MPa and the peak temperatures were in the range of 265 to 290 °C. A cocktail of organic peroxides dissolved in isododecane was used as radical initiator and propionaldehyde was used as chain-transfer agent.

About 27 000 kg/h and 50 kg/h of ethylene and 1,7-octadiene, respectively, were fed to the front of the reactor. The polymerization yielded about 8000 kg polymer/h.

The chain transfer agent was added in such amounts that the copolymer formed had a melt flow rate of about 1.90 g/10 min according to ISO 1133 (190°C, 2.16 kg).

The density of the polymer produced was about 923 kg/m$^3$ according to ISO 1183.

### Example 3

The polymer of Example 1 was stabilised by adding to the powder 600 ppm Irganox B561. The stabilised polymer was then mixed with polymer pellets obtained from Example 2 so that the content of LDPE from Example 2 was 30 % by weight of the total polymer blend A.

### Comparative Example 1 (CE1)

As Comparative Example CE1 a composition according Example 3 of EP 1 777 238 was used, but containing 70 wt% of component a) and 30 wt% of a special LDPE homopolymer, produced in an autoclave.

### Comparative Example 2 (CE2)

As Comparative Example CE2 a composition according Example 4 of EP 1 777 238 was used, containing 75 wt% of component a) and 25 wt% of CA8200 (Borealis), a LDPE homopolymer, produced in an autoclave.
The mixtures of Example 3, CE1 and CE2 were prepared as dry blends in a drum mixer.

### Example 4

Extrusion coating runs were made on Beloit coextrusion coating line with a single-screw extruder to which the dry blends were fed. It had a Peter Cloeren's die and a five layer feed block. The width of the line was 850 - 1000 mm and the maximum line speed was 1000 m/min (design value).
In the coating line above a UG kraft paper having a basis weight of 70 g/m$^2$ was coated with a layer of the polymer compositions prepared according to the Example 3 and Comparative Examples CE1 and CE2, having a basis weight of 10 g/m$^2$. The temperature of the polymer melt was set to 300 °C. The line speed was gradually increased and then the thickness was reduced until the web broke to evaluate the processability. It was found out that all the blends could be processed at a line speed of more than 500 m/min. Comparative Example 2 gave some indication of draw resonance at the highest line speed, observed as a slight oscillation of the edges of the coating.

Table 1: Extrusion coating conditions

| Conditions | Unit | Example 3 | CE1 | CE2 |
|---|---|---|---|---|
| Max line speed | m/min | > 500 | > 500 | > 500 |
| Neck-in (at 200 m/min) | mm | 104 | 106 | n.d |
| Neck-in (at 300 m/min) | mm | 97 | 96 | 153 |
| Neck-in (at 400 m/min) | mm | 95 | 97 | n.d |
| Neck-in (at 500 m/min) | mm | 93 | 95 | 165 |
| Edge stability | | stable | stable | Weaving 2 mm |

It can be seen that the blends of the invention have a reduced neck-in. It also can be seen that the neck-in is reduced when increasing the line speed.

### Claims

1. Extrusion coating polyethylene composition A), comprising

   a) 95 wt% - 40 wt% of a bimodal metallocene-based linear low density polyethylene terpolymer having a melt index MFR according to ISO 1133 (190°C, 2.16 kg) of from 3 to 40 g/10 min and a density according to ISO 1183 of from 900 to 935 kg/m$^3$, which has been produced by polymerising ethylene and two alpha-olefin comonomers having from 4 to 10 carbon atoms in at least two polymerisation stages in the presence of a metallocene catalyst.
   and

b) 5 wt% - 60wt% of a high pressure low density polyethylene copolymer, produced in a tubular reactor, having a melt index of 0.2 to 8 g/10 min according to ISO 1133 (190°C, 2.16 kg) and a density of 915 to 935 kg/m$^3$ according to ISO 1183, wherein the comonomer is an $\alpha,\omega$-alkadiene.

2. Extrusion coating polyethylene compositions A) according to claim 1, wherein said bimodal metallocene-based linear low density polyethylene terpolymer has been produced by polymerising ethylene and two alpha-olefin comonomers selected from but-1-ene, hex-1-ene, 4-methyl-pent-1-ene, hept-1-ene, oct-1-ene and dec-1-ene.

3. Extrusion coating polyethylene compositions A) according to claim 2, wherein said comonomers are but-1-ene and hex-1-ene.

4. Extrusion coating polyethylene compositions A) according to anyone of the preceding claims 1 to 3, wherein said bimodal metallocene-based linear low density polyethylene terpolymer comprises

a) 30 to 70 wt%, based on the total bimodal linear low density ethylene polymer, of a low molecular component having a density according to ISO 1183 of from 930 to 950 kg/m$^3$, and
b) 70 to 30 wt%, based on the total bimodal linear low density ethylene polymer, of a high molecular weight component having a density according to ISO 1183 of from 880 to 915 kg/m$^3$.

5. Extrusion coating polyethylene composition A) according to any of the preceding claims 1 to 4, wherein the $\alpha,\omega$-alkadiene comonomer for the high pressure low density polyethylene copolymer b) is selected from the group of 1,7-octadiene, 1,9-decadiene, 1,11-dodecadiene and 1,13-tetradecadiene, or mixtures thereof.

6. Extrusion coating polyethylene composition A) according to any of the preceding claims 1 to 5, wherein the high pressure low density polyethylene copolymer b) comprises 0.03 to 5wt%, based on the total low density polyethylene copolymer, of the $\alpha,\omega$-alkadiene comonomer.

7. Extrusion coating polyethylene composition A) according any of the preceding claims 1 to 6, wherein the high pressure low density polyethylene copolymer, produced in a tubular reactor b) has an MFR of 0.5 to 6 g/10 min according to ISO 1133 (190°C, 2.16 kg) and a density of 918 to 930 kg/m$^3$ according to ISO 1183.

8. Use of extrusion coating polyethylene compositions A) according to any one of claims 1 to 8 for extrusion coating.

**Patentansprüche**

1. Polyethylenzusammensetzung A) für das Extrusionsbeschichten, umfassend:

a) 95 bis 40 Gew.-% eines auf Metallocen basierenden, bimodalen, linearen Polyethylenterpolymers niedriger Dichte und einem Schmelzindex MFR gemäß ISO 1133 (190°C, 2,16 kg) von 3 bis 40 g/10 min und einer Dichte gemäß ISO 1183 von 900 bis 935 kg/m$^3$, das durch Polymerisieren von Ethylen und zwei $\alpha$-Olefin-Comonomeren mit 4 bis 10 Kohlenstoffatomen in zumindest zwei Polymerisationsstufen in Gegenwart eines Metallocenkatalysators erzeugt worden ist; und
b) 5 bis 60 Gew.-% eines Hochdruckpolyethylencopolymers niedriger Dichte, das in einem Rohrreaktor erzeugt worden ist und einen Schmelzindex gemäß ISO 1133 (190°C, 2,16 kg) von 0,2 bis 8 g/10 min und eine Dichte gemäß ISO 1183 von 915 bis 985 kg/m$^3$ aufweist, wobei das Comonomer ein $\alpha,\omega$-Alkadien ist.

2. Polyethylenzusammensetzungen A) für das Extrusionsbeschichten nach Anspruch 1, wobei das auf einem Metallocen basierende, bimodale, lineare Polyethylenterpolymer niedriger Dichte durch Polymerisieren von Ethylen und zwei $\alpha$-Olefin-Comonomeren erzeugt worden ist, die aus But-1-en, Hex-1-en, 4-Methylpent-1-en, Hept-1-en, Oct-1-en und Dec-1-en ausgewählt sind.

3. Polyethylenzusammensetzungen A) für das Extrusionsbeschichten nach Anspruch 2, wobei die Comonomere But-1-en und Hex-1-en sind.

4. Polyethylenzusammensetzungen A) für das Extrusionsbeschichten nach einem der vorstehenden Ansprüche 1 bis 3, wobei das auf Metallocen basierende, bimodale, lineare Polyethylenterpolymer niedriger Dichte folgendes umfaßt:

a) 30 bis 70 Gew.-%, und zwar auf das gesamte bimodale, lineare Ethylenpolymer niedriger Dichte bezogen, einer niedermolekularen Komponente mit einer Dichte gemäß ISO 1183 von 930 bis 950 kg/m$^3$ und
b) 70 bis 30 Gew.-%, und zwar auf das gesamte bimodale, lineare Ethylenpolymer niedriger Dichte bezogen, einer Komponente mit hohem Molekulargewicht mit einer Dichte gemäß ISO 1183 von 880 bis 915 kg/m$^3$.

5. Polyethylenzusammensetzung A) für das Extrusionsbeschichten nach einem der vorstehenden Ansprüche 1 bis 4, wobei das α,ω-Alkadien-Comonomer für das Hochdruckpolyethylencopolymer niedriger Dichte b) aus der Gruppe von 1,7-Octadien, 1,9-Decadien, 1,11-Dodecadien und 1,13-Tetradecadien oder Gemischen davon ausgewählt ist.

6. Polyethylenzusammensetzung A) für das Extrusionsbeschichten nach einem der vorstehenden Ansprüche 1 bis 5, wobei das Hochdruckpolyethylencopolymer niedriger Dichte b) 0,03 bis 5 Gew.-%, und zwar auf das gesamte Polyethylencopolymer niedriger Dichte bezogen, des α,ω-Alkadien-Comonomers umfaßt.

7. Polyethylenzusammensetzung A) für das Extrusionsbeschichten nach einem der vorstehenden Ansprüche 1 bis 6, wobei das Hochdruckpolyethylencopolymer niedriger Dichte b), das in einem Rohrreaktor erzeugt wurde, eine MFR gemäß ISO 1133 (190°C, 2,16 kg) von 0,5 bis 6 g/10 min und eine Dichte gemäß ISO 1183 von 918 bis 930 kg/m$^3$ aufweist.

8. Verwendung von Polyethylenzusammensetzungen A) für das Extrusionsbeschichten nach einem der Ansprüche 1 bis 8 für das Extrusionsbeschichten.

## Revendications

1. Composition de polyéthylène de revêtement par extrusion A), comprenant

a) 95 % à 40 % en poids d'un terpolymère de polyéthylène à basse densité linéaire à base de métallocène bimodal ayant un indice de fluidité MFR selon la norme ISO 1133 (190°C, 2,16 kg) de 3 à 40 g/10 min et une masse volumique selon la norme ISO 1183 de 900 à 935 kg/m$^3$, qui a été produit par polymérisation d'éthylène et de deux comonomères d'alpha-oléfine ayant de 4 à 10 atomes de carbone en au moins deux étapes de polymérisation en présence d'un catalyseur métallocène ; et
b) 5 % en poids à 60 % en poids d'un copolymère de polyéthylène de basse densité à haute pression, produit dans un réacteur tubulaire, ayant un indice de fluidité de 0,2 à 8 g/10 min selon la norme ISO 1133 (190°C, 2,16 kg) et une masse volumique de 915 à 935 kg/m$^3$ selon la norme ISO 1183, où le comonomère est un α,ω-alcadiène.

2. Compositions de polyéthylène de revêtement par extrusion A) selon la revendication 1, où ledit terpolymère de polyéthylène de basse densité linéaire à base de métallocène bimodal a été produit par polymérisation d'éthylène et de deux comonomères d'alpha-oléfine choisis parmi le but-1-ène, l'hex-1-ène, le 4-méthyl-pent-1-ène, l'hept-1-ène, l'oct-1-ène, et le déc-1-ène.

3. Compositions de polyéthylène de revêtement par extrusion A) selon la revendication 2, où lesdits comonomères sont le but-1-ène et l'hex-1-ène.

4. Compositions de polyéthylène de revêtement par extrusion A) selon l'une quelconque des revendications 1 à 3 précédentes, où ledit terpolymère de polyéthylène de basse densité linéaire à base de métallocène bimodal comprend

a) 30 à 70 % en poids, par rapport au polymère d'éthylène de basse densité linéaire bimodal total, d'un composant de faible poids moléculaire ayant une masse volumique selon la norme ISO 1183 de 930 à 950 kg/m$^3$, et
b) 70 à 30 % en poids, par rapport au polymère d'éthylène de basse densité linéaire bimodal, d'un composant à poids moléculaire élevé ayant une masse volumique selon la norme ISO 1183 de 880 à 915 kg/m$^3$.

5. Composition de polyéthylène de revêtement par extrusion A) selon l'une quelconque des revendications 1 à 4 précédentes, où le comonomère α,ω-alcadiène pour le copolymère d'éthylène de basse densité à haute pression b) est choisi parmi le groupe composé de 1,7-octadiène, 1,9-décadiène, 1,11-dodécadiène, et 1,13-tétradécadiène, ou des mélanges de ces derniers.

**6.** Composition de polyéthylène de revêtement par extrusion A) selon l'une quelconque des revendications 1 à 5 précédentes, où le copolymère de polyéthylène de basse densité à haute pression b) comprend 0,03 à 5 % en poids, en fonction du copolymère de polyéthylène de basse densité total, du comonomère $\alpha,\omega$-alcadiène.

**7.** Composition de polyéthylène de revêtement par extrusion A) selon l'une quelconque des revendications 1 à 6 précédentes, où le copolymère de polyéthylène de basse densité à haute pression, produit dans un réacteur tubulaire b) présente un MFR de 0,5 à 6 g/10 min selon la norme ISO 1133 (190°C, 2,16 kg) et une masse volumique de 918 à 930 kg/m$^3$ selon la norme ISO 1183.

**8.** Utilisation de compositions de polyéthylène de revêtement par extrusion A) selon l'une quelconque des revendications 1 à 8 pour le revêtement par extrusion.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0162847 A
- WO 2005002744 A
- EP 1777238 A
- EP 0887379 A1
- WO 2004000899 A
- WO 2004111095 A
- WO 9924478 A
- WO 9924479 A
- WO 0068315 A

**Non-patent literature cited in the description**

- Encyclopedia of Polymer Science and Engineering. 1986, vol. 6, 383-410